# EUROPEAN PATENT SPECIFICATION

(11) **EP 2 148 180 B1**
(45) Date of publication and mention of the grant of the patent: **13.07.2011**
(21) Application number: 09158530.7
(22) Date of filing: 22.04.2009
(51) Int. Cl.: G01L 9/00, G01L 9/08, G01L 1/16, G01L 19/14

(54) **SAW sensor with adjustable preload**
Akustische Oberflächenwellen-Sensor mit einstellbarer Vorspannung
Capteur à ondes acoustiques de surface avec précharge réglable

(30) Priority: 25.07.2008 GB 0813717
(43) Date of publication of application: 27.01.2010
(73) Proprietor: Transense Technologies PLC, Bicester, Oxfordshire OX25 5HD (GB)
(72) Inventor: Kalinin, Victor, Oxford, Oxfordshire OX3 0AR (GB); Lohr, Raymond David, Long Crendon, Buckinghamshire HP18 9AA (GB); Leigh, Arthur John, Banbury, Oxfordshire OX17 3AG (GB)
(74) Representative: Blower, Timothy John

(56) References cited:
- FR-A1- 2 775 525
- GB-A- 2 386 684
- US-A1- 2004 255 681

## Description

The present invention relates to SAW sensors having an adjustment for setting the preload, and more particularly to SAW pressure sensors including passive wireless SAW pressure sensors that can be used to measure high pressures

SAW pressure sensors are very well known in practice e.g. from GB2 386 684 or US 2004/255681 or GB 2 439 344. They are based either on delay lines or on resonators. They can be either wired or wireless passive devices. In the former case they can be a part of an oscillator feedback loop so the frequency of the (Continuous Wave) CW signal generated by the oscillator will depend on pressure. In the latter case they can be connected to an antenna forming a passive backscatterer. Interrogation of such a passive wireless sensor can be performed by a short RF pulse. The signal reflected from the sensor antenna will carry the information on the phase delays of the SAW (in the case of a reflective delay line sensor) or on the frequency of natural oscillations (in the case of a resonant sensor). After processing, this information will provide the pressure value.

A particular embodiment of the prior art SAW pressure sensing element based on SAW one-port resonators is shown in Fig. 1 which is the subject of applicants own earlier European patent no. 1485692. Its main part is a polished substrate 1 made of ST-quartz with three SAW resonators, PSAW, T1SAW and T2SAW having three different resonant frequencies, f₁, f₂ and f₃ respectively. In one particular embodiment these frequencies are: f₁ = 434.04 MHz, f₂ = 433.88 MHz, f₃ = 433.45 MHz so that they are within the European ISM band and the device can be used as a wireless passive sensor without a need to obtain a licence for its operation. The SAW die is attached to the metal base 3 of the package by means of adhesive in such a way that it sits on two ledges 2. The metal lid 5 covering the die has a dimple 4 that presses upon the SAW die even if the outside pressure equals the pressure inside the package. The lid 5 plays the role of a diaphragm being deformed by the external pressure. The dimple 4 transmits this deformation to the SAW substrate 1 and strains it in the area where the resonator PSAW is positioned. As a result, its frequency f₁ linearly increases with pressure. If an antenna is connected to the terminals of PSAW, its resonant frequency can be measured wirelessly following the teaching of applicant's own earlier British Patent No. 2379506 giving information about pressure. However, to exclude the influence of potentially variable antenna impedance, a reference resonator T1 SAW is connected in parallel to PSAW. T1SAW is not strained and its frequency f₂ does not depend on pressure so, measuring Fₚ = f₁ - f₂, one can obtain the reading depending on pressure but not depending on the antenna impedance. It turns out that Fₚ still depends on temperature so that temperature compensation is required for the sensor. It is achieved by connecting one more resonator, T2SAW, electrically in parallel to the two others. Since its orientation differs from the orientation of T1SAW it has a different temperature characteristic to f₃. By measuring F₁ = f₂ - f₃ together with Fₚ, both pressure and temperature can be determined.

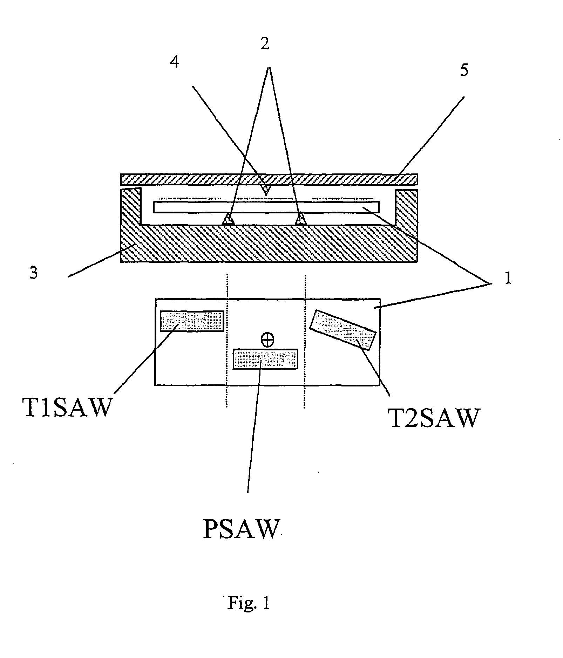

It is vitally important for the operation of the pressure sensor shown in Fig. 1 to maintain mechanical contact between the dimple 4 and the substrate 1 of the SAW die at all temperatures and pressures within its operating range, e.g. from -40°C to +125°C. This requires precise mechanical preloading of the substrate 1 during packaging, i.e. during attaching the lid 5 to the base 3. This attachment is done either by welding or by bonding but in all cases manufacturing tolerances lead to a wide spread of achieved preloading and thus to a large spread of f₁ after packaging. If the measured pressure does not exceed 100-200 psi, then the required lid thickness is well below 1 mm. In this case, the amount of preloading and the value of f₁ can be trimmed after packaging using a laser-welding system such as is disclosed in applicants own earlier UK Patent Application No.0613060.3. However, if the pressure to be measured is as high as 3000-5000 psi, the lid thickness of the package shown in Fig. 1 becomes so large that the laser trimming cannot be used any more. Mechanical preloading of the sensor becomes very difficult.

The aim of the present invention is therefore to provide a simplified system for setting the preload of a SAW sensor which overcomes the problems of the prior art. A further aim is to provide a package for a SAW pressure sensing die that will allow the sensor to work at high pressure and simplify the assembly procedure and thus reduce the sensor cost.

According to the present invention there is provided a SAW based sensor comprising a base, a lid engageable with the base to form an internal cavity therewith, a substrate supported in the cavity on one of said base and said lid and a projection formed on the other of the base and the lid which extends towards the substrate so as to engage against the substrate and apply a preload thereto, wherein the base and lid include complementary threads by means of which they are attachable to each other, the preload applied to the substrate by the projection bering adjustable by varying the rotational position of the lid relative to the base.

A SAW based sensor in accordance with the invention has the advantage that the provision of a thread coupling between the lid and the base enables separation of the lid relative to the base, and hence load applied to the substrate by the projection, to be adjusted and set very easily by simply screwing the lid onto or off of the base or vice versa. Once the desired preload is achieved, the lid and base can then be permanently secured together, for example by means of a thread-lock adhesive, welding or the like so as to prevent accidental relative rotation between the two parts.

Preferably, the projection and the substrate are each centrally located on the respective parts so that the projection, which is preferably a dimple, engages the centre of the substrate regardless of the relative rotation between the lid and the base.

The substrate is preferably supported on the lid on a pair of radially spaced apart ledges formed on an inner surface of the lid which faces towards the base, the ledges being symmetrically located on either side of the centre of the lid and extending parallel to each other. The dimple is then formed in the centre of the facing surface of the base.

Preferably the lid is a cylindrical cap having a female thread formed on its inner cylindrical surface which engages with a complementary male thread formed on an outer circumferential surface of the base. The engagement between the lid and the base, will, of course, form a hermetic seal such that the cavity can be maintained at a different pressure to the surrounds, thereby enabling monitoring of pressure.

The base is preferably also formed as a blind cylinder with one end being closed off and carrying the projection on its outer face. The outer circumferential surface of said one end is then threaded for engagement with the thread of the lid. The blind bore formed in the base is then, in use, fluidly coupled to a pressurised environment whose pressure is to be monitored, the one end of the base which separates the cavity formed between the base and the lid from the blind bore acting as a diaphragm which responds to changes in the pressure in the blind bore by varying the load applied by the dimple to the substrate. This, in turn, is detected by a SAW device mounted on the substrate.

The configuration is particularly applicable for use in measuring high pressure. The thickness and the diameter of the diaphragm can be selected / adjusted to control the flexibility of the diaphragm so that the maximum pressure to which the diaphragm is exposed does not result in an amount of strain in the SAW substrate being induced which would cause the resulting frequency shift to exceed the value limited by the ISM band width.

The outer surface of the base proximate to the open end of the cylinder advantageously also has a thread formed thereon by means of which, in use, the base may be screwed into a pipe, tank or the like whose inner environment is to be monitored, thereby exposing the blind bore and hence the inner surface of the diaphragm to the pressure to be monitored. A suitable seal will, of course, be provided to ensure a fluid tight coupling between the base and the pipe / tank.

Preferably the closed end of the base is thinner in a central region which overlies the blind bore and acts as a diaphragm than the region which surrounds the central region. This ensures that a robust region is provided for carrying the thread which mates with the lid whilst the diaphragm responsiveness can be set to meet the required. Moreover, the thicker outer section will be less susceptible to deformation during heating, enabling welding to be used to permanently fix the lid to the base without requiring subsequent tuning / trimming.

In order that the invention may be well understood, there will now be described an embodiment thereof, given by way of example, reference being made to the accompanying drawings, reference being made to the accompanying drawings:
Figure 1 is an illustration of a prior art SAW sensor; and
Figures 2a to 2d are various views of a pressure sensor embodying the present invention.

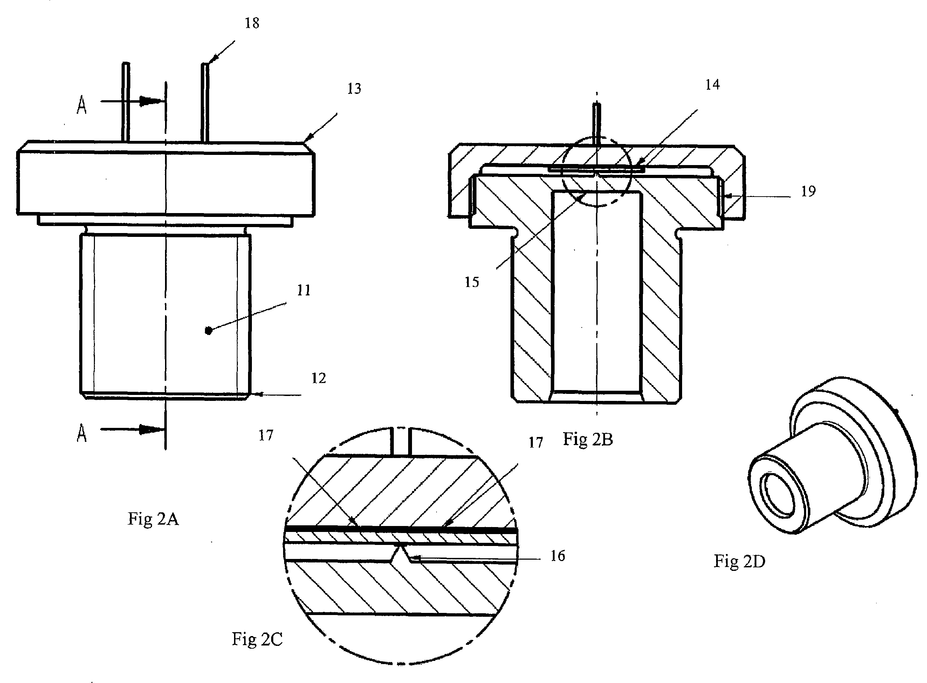

To facilitate mechanical preloading of the existing SAW sensing die, and simplify application of high pressure to the sensor, a new package is proposed according to the present invention as shown in Figure 2. The package consists of two cylindrical parts, a base 11 with a thread 12 and a tubular hole, and a lid 13. The thread 12 is used to screw the sensor into a high-pressure pipeline or a tank so that the high pressure acts upon the diaphragm 15 formed in the base 11. The SAW sensing die 14 is attached to the two ledges 17 formed on the inner surface of the lid 13. There are also two pins 18 with at least one of them electrically isolated from the lid 13. Two electrical terminals of the SAW die are connected to the two pins inside the package. The two pins can be used to connect the sensor to any suitable type of antenna if the sensor is used as a wireless passive transponder. Alternatively they can be used to connect the sensor to any interrogation electronic circuitry.

The package presented in Fig. 2 differs from the prior art package (Fig. 1) in two aspects. The first one is the above-mentioned tube formed in the threaded base 11 and closed by the diaphragm 15. This arrangement facilitates application of high pressure and deformation of the SAW die 14 through the dimple 16 made on the outer surface of the diaphragm. The thickness of the tube walls is sufficiently high to prevent their excessive deformation. The thickness of the diaphragm 15 and its diameter are selected in such a way that the amount of strain in the SAW substrate induced by the maximum pressure causes the PSAW frequency shift that does not exceed the value limited by the ISM band width. Examples of the dimensions are presented in the table below for the maximum pressure of 5000 psi.

| Diameter of the diaphragm, mm | Thickness of the diaphragm, mm |
|---|---|
| 11 | 2.3 |
| 8 | 1.5 |

The second aspect is the way in which preloading of the SAW die is performed. The lid 13 and the base 11 have a thread 19 with a sufficiently small pitch such that the base 11 is screwed into the lid 13 after bonding the SAW die 14 to the pins 18 until the dimple 16 starts touching the die 14. This moment can be easily detected by means of monitoring the PSAW resonant frequency f₁, for example, using a network analyser. As soon as f₁ increases up to its target value screwing should be stopped and the lid should be welded (or bonded by an adhesive) to the base to provide hermeticity. Thus, the fine pitch thread 19 on the base and on the lid facilitates a relatively simple automated preloading process during packaging of the pressure sensor. Relatively large thickness of the base and the lid, in the region where they are welded to each other, minimise their deformation during welding and thus may eliminate the need for subsequent trimming of the sensor and thus drastically reduce its cost.

## Claims

1. A SAW based sensor comprising a base (11), a lid (13) engageable with the base (11) to form an internal cavity therewith, a substrate (14) supported in the cavity on one of said base (11) and said lid (13) and a projection (16) formed on the other of the base (11) and the lid (13) which extends towards the substrate (14) so as to engage against the substrate (14) and apply a preload thereto, **characterised in that** the base (11) and lid (13) include complementary threads (19) by means of which they are attachable to each other, the preload applied to the substrate (14) by the projection (16) being adjustable by varying the rotational position of the lid (13) relative to the base (11).

2. A SAW based sensor according to claim 1, wherein the projection (16) and the substrate (14) are each centrally located on the respective parts so that the projection(16), which is preferably a dimple, engages the centre of the substrate (14) regardless of the relative rotation between the lid (13) and the base (11).

3. A SAW based sensor according to claim 1 or claim 2, wherein the substrate (14) is supported on the lid (13) on a pair of radially spaced apart ledges (17) formed on an inner surface of the lid (13) which faces towards the base (11), the ledges (17) being symmetrically located on either side of the centre of the lid (13) and extending parallel to each other.

4. A SAW based sensor according to claim 3, wherein the projection (16) is formed in the centre of the facing surface of the base (11).

5. A SAW based sensor according to any of the preceding claims, wherein the lid (13) is a cylindrical cap having a female thread formed on its inner cylindrical surface which engages with a complementary male thread formed on an outer circumferential surface of the base (11).

6. A SAW based sensor according to claim 5, wherein the base (11) is formed as a blind cylinder with one end being closed off and carrying the projection (16) on its outer face, the outer circumferential surface of said one end being threaded for engagement with the thread of the lid (13).

7. A SAW based sensor according to claim 6, wherein the one end of the base (11), which separates the cavity formed between the base (11) and the lid (13) from the blind bore, acts as a diaphragm which responds to changes in the pressure in the blind bore, varying the load applied by the projection (16) to the substrate (14).

8. A SAW based sensor according to claim 6 or claim 7, wherein the outer surface of the base (11) proximate to the open end of the cylinder has a thread (12) formed thereon by means of which, in use, the base (11) may be screwed into a vessel whose pressure is to be monitored thereby exposing the blind bore and hence the inner surface of the diaphragm to the pressure to be monitored.

9. A SAW based sensor according to any of claims 6 to 8, wherein the closed end of the base (11) is thinner in a central region which overlies the blind bore and acts as the diaphragm.

10. A method of adjusting the preload of a SAW based sensor according to any of the preceding claims, comprising the step of effecting relative rotation between the base (11) and the lid (13) in order to vary the separation there-between and hence vary the engagement between the projection (16) and the substrate (14), and securing the lid (13) to the base (11) against further relative rotation once the desired preload has been achieved.

11. A method according to claim 10, wherein the step of securing the lid (13) to the base (11) is achieved by means of welding.

12. A method according to claim 10, wherein the step of securing the lid (13) to the base (11) is achieved by means of an adhesive.

13. A method according to claim 12, wherein the adhesive is used on the threads (19) of at least one of the lid (13) and the base (11).

## Patentansprüche

1. Ein SAW-Sensor, bestehend aus einem Basisteil (11), einem Deckel (13), der in den Basisteil (11) einrastbar ist, sodass sich ein interner Hohlraum bildet, einem Träger (14), der im Hohlraum an den besagten Basisteil (11) oder den Deckel (13) montiert ist, sowie eine Ausbuchtung (16), die sich auf dem jeweils anderen Teil, d.h. dem Basisteil (11) oder dem Deckel (13), befindet, der sich zum Träger (14) hin erstreckt, um am Träger (14) einzurasten und darauf eine Vorspannung auszuüben, **dadurch gekennzeichnet, dass** der Basisteil (11) und der Deckel (13) Komplementärgewinde (19) beinhalten, wodurch sie miteinander verbunden werden können, wobei die Vorspannung die durch die Ausbuchtung (16) auf den Träger (14) ausgeübt wird, durch Abänderung der Drehposition des Deckels (13) relativ zum Basisteil (11) justierbar ist.

2. Ein SAW-Sensor gemäß Anspruch 1, worin die Ausbuchtung (16) und der Träger (14) jeweils mittig auf den entsprechenden Teilen angeordnet sind, sodass die Ausbuchtung (16), die möglichst eine Delle ist, in der Mitte des Trägers (14) einrastet, unabhängig von der relativen Drehung zwischen dem Deckel (13) und dem Basisteil (11).

3. Ein SAW-Sensor gemäß Anspruch 1 oder Anspruch 2, worin der Träger (14) auf dem Deckel (13) von einem Paar radial beabstandeter Leisten (17) getragen wird, die auf einer innenfläche des Deckels (13), welche dem Basisteil (11) gegenüberliegt, angeordnet sind, wobei die Leisten sich symmetrisch auf jeder Seite der Mitte des Deckels (13) befinden und sich parallel zueinander erstrecken.

4. Ein SAW-Sensor gemäß Anspruch 3, worin die Ausbuchtung (16) sich in der Mitte der Sichtfläche des Basisteils (11) befindet.

5. Ein SAW-Sensor gemäß einem der vorhergehenden Ansprüche, worin der Deckel (13) eine zylindrische Kappe ist, die auf ihrer zylindrischen innenfläche mit einem innengewinde versehen ist, wobei das Innengewinde in ein komplementäres Außengewinde eingreift, das sich auf einer äußeren Umfangsfläche des Basisteils (11) befindet.

6. Ein SAW-Sensor gemäß Anspruch 5, worin der Basisteil (11) als ein Blindzylinder geformt ist, dessen Ende geschlossen ist und die Ausbuchtung (16) auf der Außenseite aufweist, wobei die äußere Umfangsfläche des besagten Endes mit einem Gewinde versehen ist, damit es mit dem Gewinde des Deckels (13) verschraubt werden kann.

7. Ein SAW-Sensor gemäß Anspruch 6, worin das eine Ende des Basisteils (11), das den Hohlraum, der sich zwischen dem Basisteil (11) und dem Deckel (13) bildet, von der Blindbohrung trennt, als Membran wirkt, die auf die Druckveränderungen in der Blindbohrung reagiert, wodurch die auf die Ausbuchtung (16) und den Träger (14) ausgeübte Belastung verändert wird.

8. Ein SAW-Sensor gemäß Anspruch 6 oder Anspruch 7, worin die Außenfläche des Basisteils (11) in der Nähe des offenen Zylinderendes mit einem Gewinde (12) versehen ist, mit dem der Basisteil (11), wenn sich der Sensor im Einsatz befindet, in ein Behältnis geschraubt werden kann, dessen Druck überwacht werden soll, wodurch die Blindbohrung und somit die innenfläche der Membran gegenüber dem zu messenden Druck exponiert werden.

9. Ein SAW-Sensor gemäß den Ansprüchen 6 bis 8, worin das geschlossene Ende des Basisteils (11) im zentralen Bereich, der über der Blindbohrung liegt, dünner ist und als Membran fungiert.

10. Eine Methode zur Justierung der Vorspannung eines SAW-Sensors gemäß einem der vorhergehenden Ansprüche, bestehend aus der Herbeiführung einer relativen Drehung zwischen dem Basisteil (11) und dem Deckel (13), um die Trennung dazwischen zu variieren und somit das Einrasten zwischen der Ausbuchtung (16) und dem Träger (14) zu verändern und den Deckel (13) gegen eine weitere relative Drehung auf dem Basisteil (11) zu fixieren, sobald die gewünschte Vorspannung erreicht wurde.

11. Eine Methode gemäß Anspruch 10, worin die Fixierung des Deckels (13) auf dem Basisteil (11) durch Anschweißen erzielt wird.

12. Eine Methode gemäß Anspruch 10, worin die Fixierung des Deckels (13) auf dem Basisteil (11) mit Hilfe eines Klebstoffs erzielt wird.

13. Eine Methode gemäß Anspruch 12, worin der Klebstoff auf die Gewinde (19) von mindestens einem, d.h. dem Deckel (13) oder der Basis (11), aufgetragen wird.

## Revendications

1. Capteur basé sur les ondes acoustiques de surface comprenant une base (11), un couvercle (13) pouvant être accouplé avec la base (11) de manière à former avec celle-ci une cavité interne, un substrat (14) porté dans la cavité sur un(e) de ladite base (11) et dudit couvercle (13) et une saillie (16) formée sur l'autre de ladite base (11) et dudit couvercle (13) qui s'étend vers le substrat (14) de manière à porter contre le substrat (14) et à appliquer une précharge à celui-ci, **caractérisé en ce que** la base (11) et le couvercle (13) comportent des filetages complémentaires (19) au moyen desquels ils peuvent être rattachés l'un à l'autre, la précharge appliquée au substrat (14) par la saillie (16) étant ajustable en faisant varier la position de rotation du couvercle (13) par rapport à la base (11).

2. Capteur basé sur les ondes acoustiques de surface selon la revendication 1, dans lequel la saillie (16) et le substrat (14) sont chacun situés sur les pièces respectives de l'ensemble de manière à ce que la saillie (16), qui est préférablement une ride, porte contre le centre du substrat (14) quelle que soit la position de rotation du couvercle (13) par rapport à la base (11).

3. Capteur basé sur les ondes acoustiques de surface selon la revendication 1 ou la revendication 2, dans lequel le substrat (14) est porté sur le couvercle (13) sur une paire de rebords espacés radialement l'un de l'autre (17) formés sur une surface intérieure du couvercle (13) qui fait face à la base (11), les rebords (17) étant positionnés symétriquement de chaque côté du centre du couvercle (13) et s'étendant parallèlement l'un par rapport à l'autre.

4. Capteur basé sur les ondes acoustiques de surface selon la revendication 3, dans lequel la saillie (16) est formée au centre de la surface faisant face à la base (11).

5. Capteur basé sur les ondes acoustiques de surface selon l'une quelconque des revendications précédentes, dans lequel le couvercle (13) est un chapeau cylindrique comportant un filetage femelle formé sur sa surface cylindrique intérieure qui peut s'accoupler avec un filetage mâle complémentaire formé sur une surface circonférentielle extérieure de la base (11).

6. Capteur basé sur les ondes acoustiques de surface selon la revendication 5, dans lequel la base (11) est sous la forme d'un cylindre borgne dont une extrémité est obturée et porte la saillie (16) sur sa face extérieure, la surface circonférentielle extérieure de ladite une extrémité étant filetée en vue de l'accouplement avec le filetage du couvercle (13).

7. Capteur basé sur les ondes acoustiques de surface selon la revendication 6, dans lequel ladite extrémité de la base (11), qui sépare la cavité formée entre la base (11) et le couvercle (13) de l'alésage borgne, agit comme un diaphragme qui réagit aux changements de la pression dans l'alésage borgne, en faisant varier la charge appliquée par la saillie (16) au substrat (14).

8. Capteur basé sur les ondes acoustiques de surface selon la revendication 6 ou la revendication 7, dans lequel la surface extérieure de la base (11) proximale à l'extrémité ouverte du cylindre est dotée d'un filetage (12) au moyen duquel, lors de l'utilisation, la base (11) peut être vissée sur un récipient dont on souhaite contrôler la pression, exposant de la sorte l'alésage borgne et par conséquent la surface intérieure du diaphragme, à la pression qui doit être contrôlée.

9. Capteur basé sur les ondes acoustiques de surface selon l'une quelconque des revendications 6 à 8, dans lequel l'extrémité obturée de la base (11) est plus mince dans une région centrale qui recouvre l'alésage borgne et agit en tant que diaphragme.

10. Procédé de réglage de la précharge d'un capteur basé sur les ondes acoustiques de surface selon l'une quelconque des revendications précédentes, comprenant les étapes consistant à produire la rotation relative entre la base (11) et le couvercle (13) de manière à faire varier la séparation entre les deux et à faire varier par conséquent la force avec laquelle la saillie (16) porte contre le substrat (14), et à bloquer le couvercle (13) sur la base (11) de manière à éviter toute rotation relative une fois que la précharge souhaitée a été obtenue.

11. Procédé selon la revendication 10, dans lequel l'étape de blocage du couvercle (13) sur la base (11) est réalisée au moyen d'un soudage.

12. Procédé selon la revendication 10, dans lequel l'étape de blocage du couvercle (13) sur la base (11) est réalisée au moyen d'un adhésif,

13. Procédé selon la revendication 12, dans lequel l'adhésif est utilisé sur les filets (19) d'au moins un du couvercle (13) et de la base (11).
